(19) Europäisches Patentamt
European Patent Office
Office européen des brevets

(11) **EP 4 542 875 A1**

(12) **EUROPEAN PATENT APPLICATION**
published in accordance with Art. 153(4) EPC

(43) Date of publication:
**23.04.2025 Bulletin 2025/17**

(21) Application number: **23824175.6**

(22) Date of filing: **12.06.2023**

(51) International Patent Classification (IPC):
$H04B\ 7/06^{(2006.01)}$    $H04W\ 72/23^{(2023.01)}$
$H04L\ 5/00^{(2006.01)}$    $G06N\ 20/00^{(2019.01)}$

(52) Cooperative Patent Classification (CPC):
**G06N 20/00; H04B 7/06; H04L 5/00; H04W 72/23**

(86) International application number:
**PCT/KR2023/008016**

(87) International publication number:
**WO 2023/243958 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.06.2022 KR 20220072771**

(71) Applicant: **LG Electronics Inc.**
**Yeongdeungpo-gu**
**Seoul 07336 (KR)**

(72) Inventors:
• **KIM, Hyungtae**
**Seoul 06772 (KR)**
• **KANG, Jiwon**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING/RECEIVING CHANNEL STATE INFORMATION IN WIRELESS COMMUNICATION SYSTEM**

(57) Disclosed are a method and a device for transmitting/receiving channel state information (CSI) in a wireless communication system. The method, according to one embodiment of the present disclosure, may comprise the steps of: receiving configuration information related to CSI from a base station; receiving a CSI-RS on one or more CSI resources from the base station; and transmitting the CSI to the base station on the basis of the configuration information.

FIG.18

EP 4 542 875 A1

**Description**

[Technical Field]

The present disclosure relates to a wireless communication system, and in more detail, relates to a method and an apparatus of transmitting and receiving channel state information (CSI) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving CSI.

In addition, an additional technical object of the present disclosure is to provide a method and an apparatus for transmitting and receiving CSI based on artificial intelligence/machine learning (AI/ML) operation.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station, configuration information related to channel state information (CSI); receiving, from the base station, a CSI reference signal (CSI-RS) on one or more CSI resources; and transmitting, to the base station, the CSI based on the configuration information. The CSI may include information for a CSI reporting mode assumed by the UE to calculate the CSI.

A method performed by a base station in a wireless communication system according to an additional aspect of the present disclosure may include: transmitting, to a user equipment (UE), configuration information related to channel state information (CSI); transmitting, to a UE, a CSI reference signal (CSI-RS) on one or more CSI resources; and receiving, from the UE, the CSI. The CSI may include information for a CSI reporting mode assumed by the UE to calculate the CSI.

[Technical Effects]

According to an embodiment of the present disclosure, transmission and reception of CSI feedback reflecting dynamic channel conditions are possible.

In addition, according to an embodiment of the present disclosure, downlink transmission performance can be improved as dynamic channel conditions are reflected in CSI feedback.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a classification of artificial intelligence.

FIG. 8 illustrates a feed-forward neural network.

FIG. 9 illustrates a recurrent neural network.

FIG. 10 illustrates a convolutional neural network.

FIG. 11 illustrates an auto encoder.

FIG. 12 illustrates a functional framework for an AI operation.

FIG. 13 is a diagram illustrating split AI inference.

FIG. 14 illustrates an application of a functional framework in a wireless communication system.

FIG. 15 illustrates an application of a functional framework in a wireless communication system.

FIG. 16 illustrates an application of a functional framework in a wireless communication system.

FIG. 17 is a diagram illustrating a signaling procedure between a network and a UE for a method for transmitting and receiving channel state information according to an embodiment of the present disclosure.

FIG. 18 is a diagram illustrating an operation of a UE for a method for transmitting and receiving channel state information according to an embodiment of the present disclosure.

FIG. 19 is a diagram illustrating an operation of a base station for a method for transmitting and receiving channel state information according to an embodiment of the present disclosure.

FIG. 20 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS (Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212(multiplexing and channel coding), TS 36.213(physical layer procedures), TS 36.300(overall description), TS 36.331(radio resource control) may be referred to.

For 3GPP NR, TS 38.211 (physical channels and modulation), TS 38.212(multiplexing and channel coding), TS 38.213(physical layer procedures for control), TS 38.214 (physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality

- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

<u>Overall System</u>

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

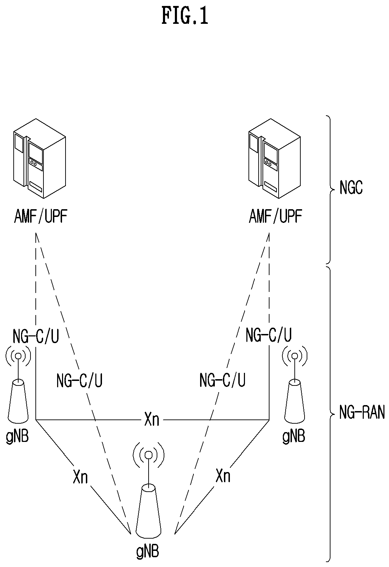

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

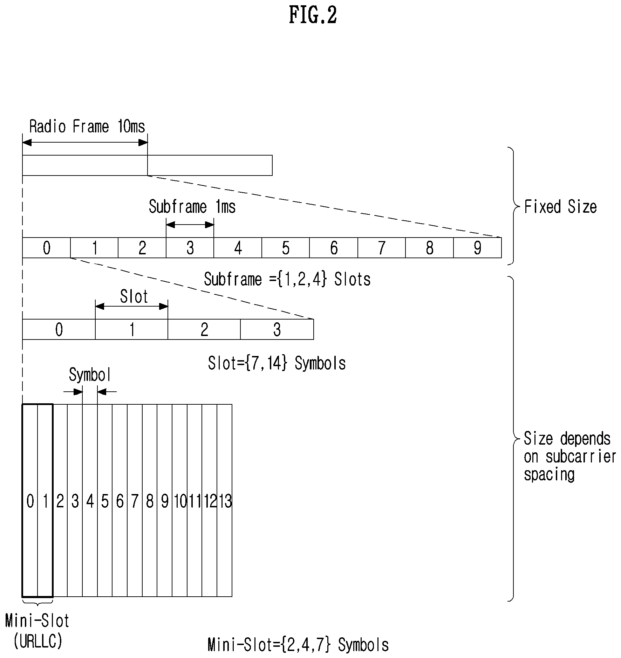

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=2^μ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52 600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is 480.103 Hz and $N_f$ is 4096. Downlink and uplink transmission is configured (organized) with a radio frame having a duration of $T_f=1/(\Delta f_{max}N_f/100) \cdot T_c=10ms$. Here, a radio frame is configured with 10 subframes having a duration of $T_{sf}=(\Delta f_{max}N_f/1000) \cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu \in \{0, ..., N_{slot}^{subframe,\mu}-1\}$ in a subframe and are numbered in an increasing order of $n_{s,f}^\mu \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

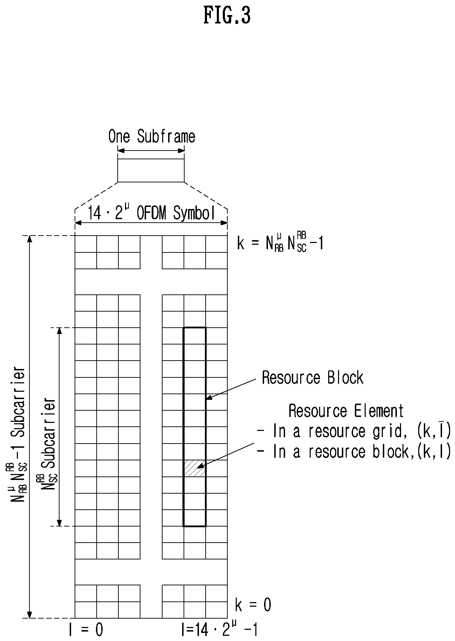

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0, ..., $N_{RB}^{\mu}N_{sc}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k,l) is used. Here, 1=0, ..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

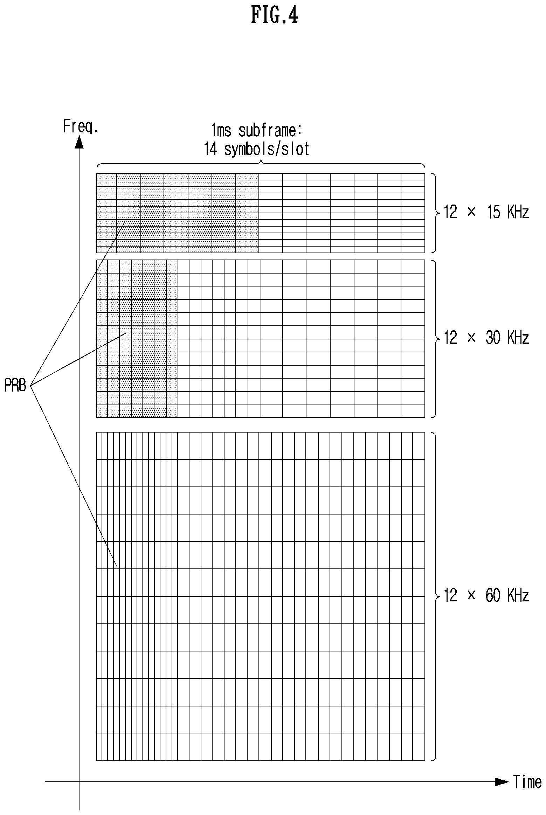

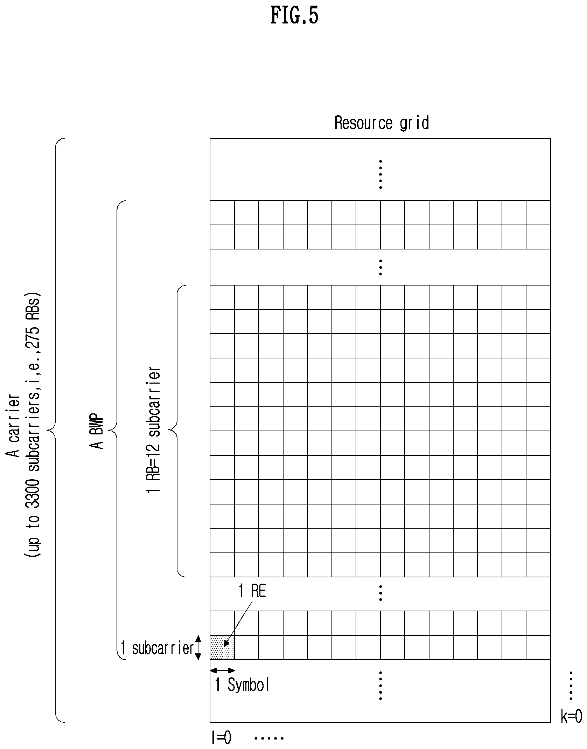

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE (Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

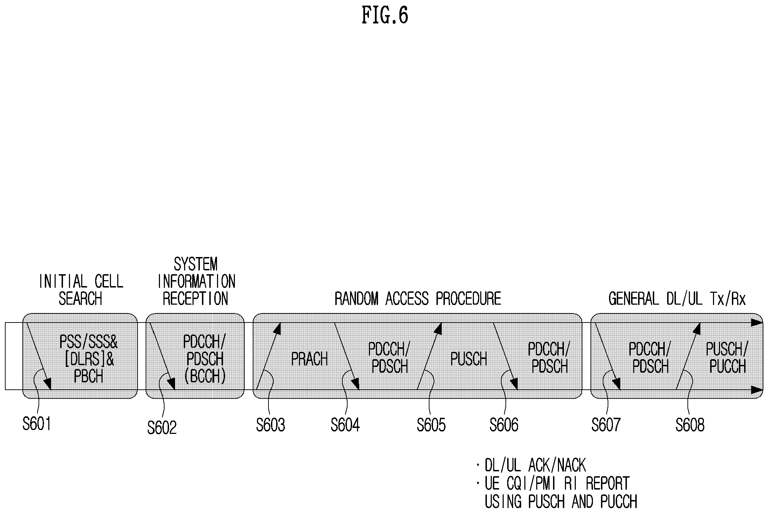

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block) -PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

The AI-related descriptions and operations described below can be applied in combination with the methods proposed in the present disclosure described later, or can be supplemented to clarify the technical features of the methods proposed in the present disclosure.

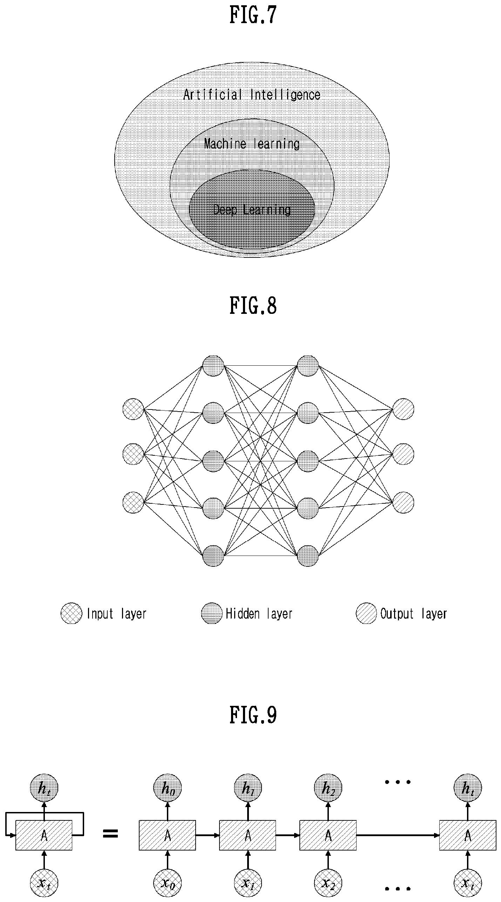

FIG. 7 illustrates a classification of artificial intelligence.

Referring to FIG. 7, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work. For offline learning, the system does not learn incrementally, the learning is performed using all available collected data and applied to the system without further learning. If learning about new data is necessary, learning can begin again using all new data.

b) Online Learning

This refers to a method of gradually improving performance by incrementally additional learning with data generated in real time, recently, by taking advantage of the fact that data that can be used for learning continues to be generated through the Internet, Learning is performed in real time for each (bundle) of specific data collected online, allowing the system to quickly adapt to changing data.

Only online learning is used to build an AI system, so learning may be performed only with data generated in real time, or after offline learning is performed using a predetermined data set, additional learning may be performed using additional real-time data (online + offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM) .

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.
- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.

Hereinafter, representative models of deep learning will be exemplified.

FIG. 8 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

FIG. 9 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 9, A represents a neural network, xt represents an input value, and ht represents an output value. Here, ht may refer to a state value representing the current state based on time, and ht-1 may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

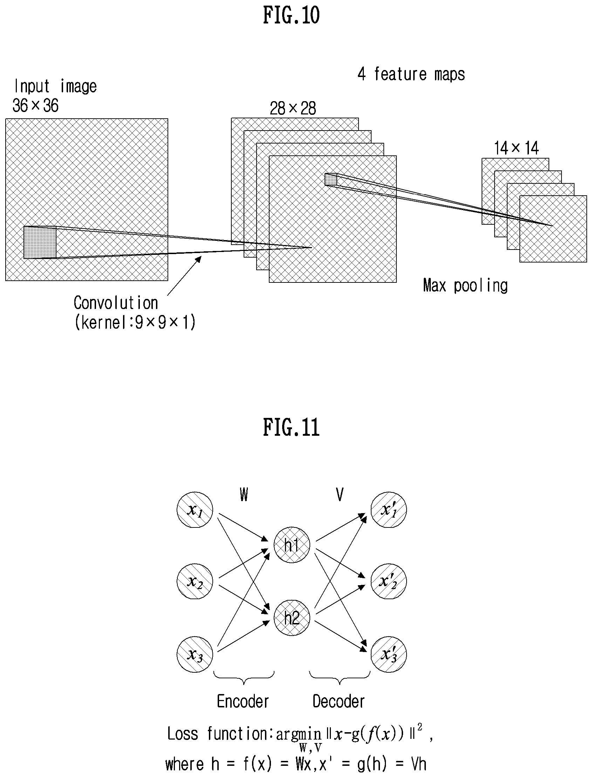

FIG. 10 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

FIG. 11 illustrates an auto encoder.

Auto encoder refers to a neural network that receives a feature vector x (x1, x2, x3, ...) as input and outputs the same or similar vector x' (x'1, x'2, x'3, ...)'.

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 11 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

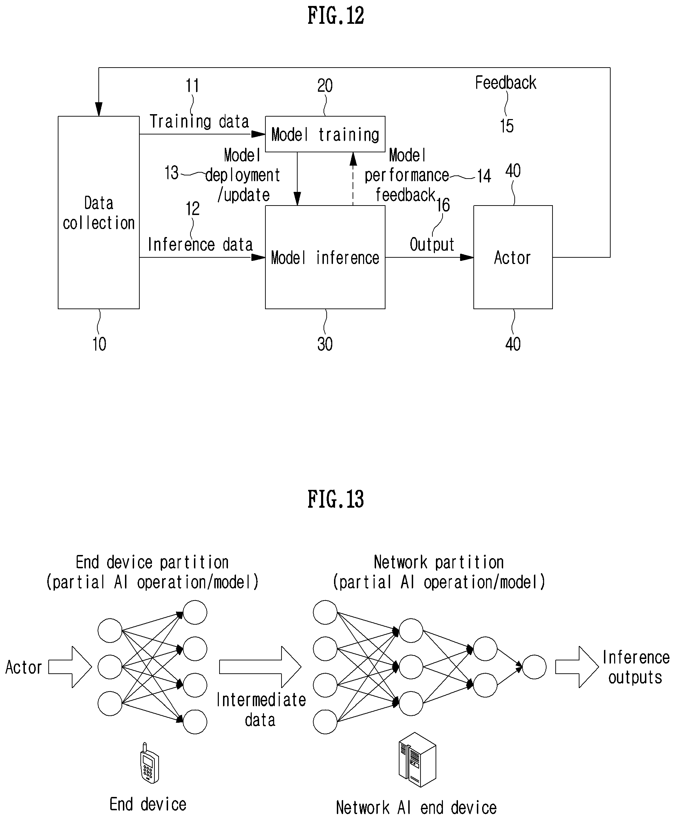

FIG. 12 illustrates a functional framework for an AI operation.

Referring to Figure 12, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 12 may be implemented in a RAN node (e.g., base station, TRP, base station central unit (CU), etc.), a network node, a network operator's operation administration maintenance (OAM), or a UE.

Alternatively, the function illustrated in FIG. 12 may be implemented through cooperation of two or more entities among a RAN, a network node, an OAM of network operator, or a UE. For example, one entity may perform some of the functions of FIG. 12 and other entities may perform the remaining functions. As such, as some of the functions illustrated in FIG. 12 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment /Update (13) and Model Performance Feedback (14) can be omitted.

Alternatively, any one of the functions illustrated in FIG. 12 may be performed through collaboration between two or more entities among a RAN, a network node, an OAM of a network operator, or a UE. This can be referred to as a split AI operation.

FIG. 13 is a diagram illustrating split AI inference.

FIG. 13 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

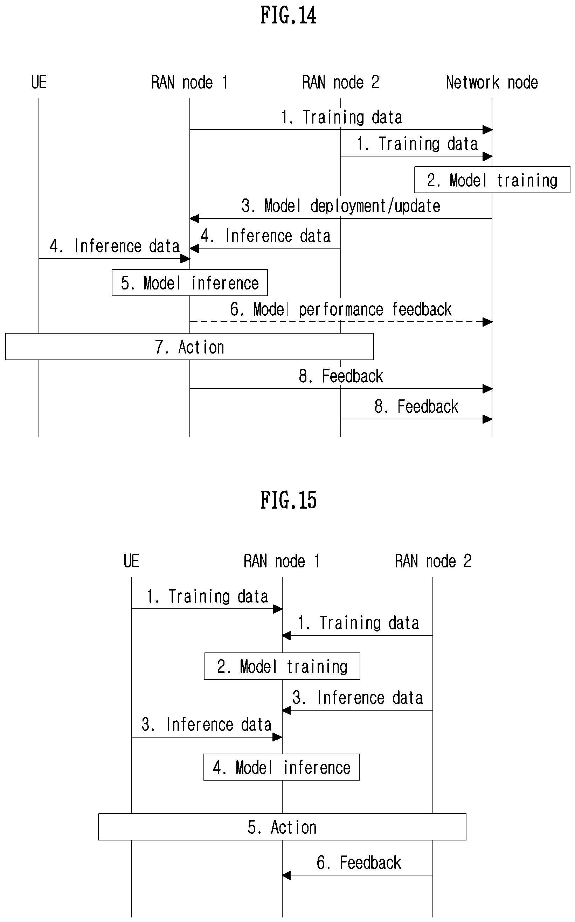

FIG. 14 illustrates an application of a functional framework in a wireless communication system.

FIG. 14 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 15 illustrates an application of a functional framework in a wireless communication system.

FIG. 15 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

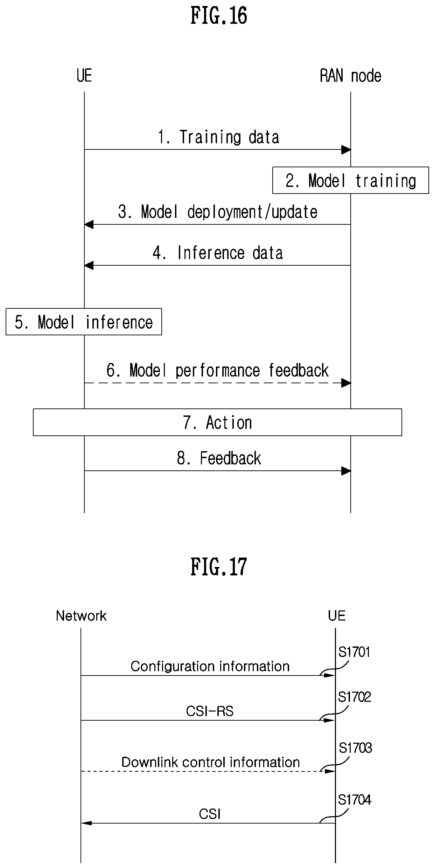

FIG. 16 illustrates an application of a functional framework in a wireless communication system.

FIG. 16 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

CSI(channel state information)-related Operation

In an NR (New Radio) system, a CSI-RS(channel state information-reference signal) is used for time and/or frequency tracking, CSI computation, L1(layer 1)-RSRP (reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

   i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

   ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

   Parameters representing a usage of a CSI-RS (e.g., a 'repetition' parameter related to BM, a 'trs-Info' parameter related to tracking) may be configured per NZP CSI-RS resource set.

   iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

   - A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

1) CSI Measurement

An NR system supports more flexible and dynamic CSI measurement and reporting. Here, the CSI measurement may include a procedure of receiving a CSI-RS and acquiring CSI by computing a received CSI-RS.

As a time domain behavior of CSI measurement and reporting, aperiodic/semi-persistent/periodic CM (channel measurement) and IM (interference measurement) are supported. 4-port NZP CSI-RS RE pattern is used for CSI-IM configuration.

CSI-IM based IMR of NR has a design similar to CSI-IM of LTE and is configured independently from ZP CSI-RS resources for PDSCH rate matching. In addition, each port emulates an interference layer having (a desirable channel and) a precoded NZP CSI-RS in NZP CSI-RS-based IMR. As it is about intra-cell interference measurement for a multi-user case, MU interference is mainly targeted.

A base station transmits a precoded NZP CSI-RS to a terminal in each port of configured NZP CSI-RS based IMR.

A terminal assumes a channel/interference layer and measures interference for each port in a resource set.

When there is no PMI and RI feedback for a channel, a plurality of resources are configured in a set and a base station or a network indicates a subset of NZP CSI-RS resources through DCI for channel/interference measurement.

A resource setting and a resource setting configuration are described in more detail.

2) Resource Setting

Each CSI resource setting 'CSI-ResourceConfig' includes a configuration for a S≥1 CSI resource set (given by a higher layer parameter csi-RS-ResourceSetList). A CSI resource setting corresponds to CSI-RS- resourcesetlist. Here, S represents the number of configured CSI-RS resource sets. Here, a configuration for a S≥1 CSI resource set includes each CSI resource set including CSI-RS resources (configured with a NZP CSI-RS or CSI-IM) and a SS/PBCH block (SSB) resource used for L1-RSRP computation.

Each CSI resource setting is positioned at a DL BWP(bandwidth part) identified by a higher layer parameter bwp-id. In addition, all CSI resource settings linked to a CSI reporting setting have the same DL BWP.

A time domain behavior of a CSI-RS resource in a CSI resource setting included in a CSI-ResourceConfig IE may be indicated by a higher layer parameter resourceType and may be configured to be aperiodic, periodic or semi-persistent. For a periodic and semi-persistent CSI resource setting, the number (S) of configured CSI-RS resource sets is limited to '1'. For a periodic and semi-persistent CSI resource setting, configured periodicity and a slot offset are given by a numerology of an associated DL BWP as given by bwp-id.

When UE is configured with a plurality of CSI-ResourceConfigs including the same NZP CSI-RS resource ID, the same time domain behavior is configured for CSI-ResourceConfig.

When UE is configured with a plurality of CSI-ResourceConfigs including the same CSI-IM resource ID, the same time domain behavior is configured for CSI-ResourceConfig.

One or more CSI resource settings for channel measurement (CM) and interference measurement (IM) are configured through higher layer signaling as follows.

- CSI-IM resource for interference measurement
- NZP CSI-RS resource for interference measurement
- NZP CSI-RS resource for channel measurement

In other words, a CMR (channel measurement resource) may be a NZP CSI-RS for CSI acquisition and an IMR(Interference measurement resource) may be a NZP CSI-RS for CSI-IM and IM.

In this case, CSI-IM(or a ZP CSI-RS for IM) is mainly used for inter-cell interference measurement.

In addition, an NZP CSI-RS for IM is mainly used for intra-cell interference measurement from multi-users.

UE may assume that CSI-RS resource(s) for channel measurement and CSI-IM / NZP CSI-RS resource(s) for interference measurement configured for one CSI reporting are 'QCL-TypeD' per resource.

3) Resource Setting Configuration

As described, a resource setting may mean a resource set list.

For aperiodic CSI, each trigger state configured by using a higher layer parameter CSI-AperiodicTriggerState is associated with one or a plurality of CSI-ReportConfigs that each CSI-ReportConfig is linked to a periodic, semi-persistent or aperiodic resource setting.

One reporting setting may be connected to up to 3 resource settings.

- When one resource setting is configured, a resource setting (given by a higher layer parameter resourcesForChannelMeasurement) is about channel measurement for L1-RSRP computation.
- When two resource settings are configured, a first resource setting (given by a higher layer parameter resourcesForChannelMeasurement) is for channel measurement and a second resource setting (given by csi-IM-ResourcesForInterference or nzp-CSI-RS - ResourcesForInterference) is for interference measurement performed in CSI-IM or a NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement and a third resource setting (given by nzp-CSI-RS-ResourcesForInterference) is for NZP CSI-RS based interference measurement.

For semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.
- When two resource settings are configured, a first resource setting (given by resourcesForChannelMeasurement) is for channel measurement and a second resourece setting (given by a higher layer parameter csi-IM-ResourcesFor-Interference) is used for interference measurement performed in CSI-IM.

4) CSI Computation

When interference measurement is performed in CSI-IM, each CSI-RS resource for channel measurement is associated with a CSI-IM resource per resource in an order of CSI-RS resources and CSI-IM resources in a corresponding resource set. The number of CSI-RS resources for channel measurement is the same as the number of CSI-IM resources.
In addition, when interference measurement is performed in an NZP CSI-RS, UE does not expect to be configured with one or more NZP CSI-RS resources in an associated resource set in a resource setting for channel measurement.
A terminal configured with a higher layer parameter nzp-CSI-RS-ResourcesForInterference does not expect that 18 or more NZP CSI-RS ports will be configured in a NZP CSI-RS resource set.
For CSI measurement, a terminal assumes the followings.

- Each NZP CSI-RS port configured for interference measurement corresponds to an interference transmission layer.
- All interference transmission layers of an NZP CSI-RS port for interference measurement consider EPRE (energy per resource element) ratio.
- A different interference signal in RE(s) of an NZP CSI-RS resource for channel measurement, an NZP CSI-RS resource for interference measurement or a CSI-IM resource for interference measurement

5) CSI Report

For a CSI report, a time and frequency resource which may be used by UE are controlled by a base station.
CSI(channel state information) may include at least one of a channel quality indicator(CQI), a precoding matrix indicator(PMI), a CSI-RS resource indicator (CRI), a SS/PBCH block resource indicator (SSBRI), a layer indicator (LI), a rank indicator (RI) or L1-RSRP.
For CQI, PMI, CRI, SSBRI, LI, RI, L1-RSRP, a terminal is configured by a higher layer with $N \geq 1$ CSI-ReportConfig reporting setting, $M \geq 1$ CSI-ResourceConfig resource setting and a list of one or two trigger states (provided by aperiodicTriggerStateList and semiPersistentOnPUSCH-TriggerStateList). Each trigger state in the aperiodicTrigger-StateList includes a associated CSI-ReportConfigs list which indicates a channel and optional resource set IDs for interference. In semiPersistentOnPUSCH-TriggerStateList, one associated CSI-ReportConfig is included in each trigger state.
In addition, a time domain behavior of CSI reporting supports periodic, semi-persistent, aperiodic.

i) Periodic CSI reporting is performed in a short PUCCH, a long PUCCH. Periodicity and a slot offset of periodic CSI reporting may be configured by RRC and refers to a CSI-ReportConfig IE.
ii) SP(semi-periodic) CSI reporting is performed in a short PUCCH, a long PUCCH, or a PUSCH.

For SP CSI in a short/long PUCCH, periodicity and a slot offset are configured by RRC and a CSI report is activated/deactivated by separate MAC CE / DCI.
For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used.
An initial CSI report timing follows a PUSCH time domain allocation value indicated by DCI and a subsequent CSI report timing follows a periodicity configured by RRC.
DCI format 0_1 may include a CSI request field and activate/deactivate a specific configured SP-CSI trigger state. SP CSI reporting has activation/deactivation equal or similar to a mechanism having data transmission in a SPS PUSCH.

iii) Aperiodic CSI reporting is performed in a PUSCH and is triggered by DCI. In this case, information related to trigger of aperiodic CSI reporting may be delivered/indicated/configured through MAC-CE.

For AP CSI having an AP CSI-RS, AP CSI-RS timing is configured by RRC and timing for AP CSI reporting is dynamically controlled by DCI.

In NR, a method of dividing and reporting CSI in a plurality of reporting instances applied to a PUCCH based CSI report in LTE (e.g., transmitted in an order of RI, WB PMI/CQI, SB PMI/CQI) is not applied. Instead, in NR, there is a limit that a specific CSI report is not configured in a short/long PUCCH and a CSI omission rule is defined. In addition, regarding AP CSI reporting timing, a PUSCH symbol/slot location is dynamically indicated by DCI. In addition, candidate slot offsets are configured by RRC. For CSI reporting, a slot offset(Y) is configured per reporting setting. For UL-SCH, a slot offset K2 is separately configured.

2 CSI latency classes (low latency class, high latency class) are defined with regard to CSI computation complexity. Low latency CSI is WB CSI which includes up to 4 ports Type-I codebooks or up to 4 ports non-PMI feedback CSI. High latency CSI refers to CSI other than low latency CSI. For a normal terminal, (Z, Z') is defined in a unit of OFDM symbols. Here, Z represents the minimum CSI processing time until a CSI report is performed after receiving aperiodic CSI triggering DCI. In addition, Z' refers to the minimum CSI processing time until a CSI report is performed after receiving a CSI-RS for a channel/interference.

Additionally, a terminal reports the number of CSI which may be calculated at the same time.

Method for transmitting/receiving CSI

In the above-described CSI-related operation, reportQuantity specifies contents of a report reported by a UE. reportQuantity can be set to the following values:

- 'None': In this case, a UE does not provide a CSI report to a base station. For example, the base station may repeatedly transmit a CSI-RS, and the UE may attempt to receive the CSI-RS with each receive beam. Then, the UE may identify the best receive beam and use the receive beam for subsequent data reception.
- 'CRI, RI and CQI (cri-RI-CQI)': An RI and a CQI can be used in the open loop (OL) MIMO transmission scheme. A base station can iteratively cycle through a set of predefined precoding matrices. In addition, the 'cri-R1-CQI' value can be used when there is channel reciprocity and the base station can determine an appropriate precoding matrix from the uplink SRS measurement.
- 'CRI, RI, PMI and CQI (cri-RI-PMI-CQI)': An RI, a CQI and a PMI can be used for the closed loop (CL) MIMO transmission scheme. A set of four codebook categories can be specified for PMI reporting: Type 1 Single Panel codebook and Type 1 Multi-Panel codebook for single-user MIMO of up to 8 ranks, Type 2 Single Panel codebook and Type 2 Port Selection codebook for multi-user MIMO limited to up to 2 ranks. Type 1 codebook provides relatively coarse information, while Type 2 codebook provides more detailed information at the expense of increased signal overhead.
- 'CRI, RI, LI, PMI and CQI (cri-RI-LI-PMI-CQI)': This is also applicable to the CL MIMO transmission method and also provides LI (Layer Indicator) information to a base station. LI information can be used to map a specific logical antenna port to the best transmission layer.
- 'CRI, RI, i1 and CQI (cri-RI-i1-CQI)': This can be applied to a semi-open loop (semi OL) transmission scheme. In this case, a UE reports partial precoding information (only 'i1') instead of reporting complete precoding information (a combination of 'i1' and 'i2'). This option can be used with Type 1 Single Panel codebook, where a UE reports a single wideband PMI value (i.e., i1) that is assumed to change relatively slowly. A base station can combine the reported wideband PMI value (i.e., i1) with open loop precoding. In general, the reported CQI value is conditional on the reported PMI value. That is, the CQI value is valid when the base station transmits using the proposed precoding matrix. In this case, since the UE reports only a partial PMI, the UE can assume a random selection of the precoding matrix for the remaining PMI. Furthermore, the UE can assume that the precoding is applied to a precoding resource block group (PRG) with a size equal to the PDSCH bundling size for CSI (pdsch-BundleSizeForCSI).
- 'CRI, RI and $i_1$ (cri-RI-i1)': In this case, a base station indicates a UE to report an RI and a partial PMI, however does not indicate the UE to report a CQI. This configuration can be used together with the 'CRI, RI, PMI and CQI (cri-RI-PMI-CQI)' configuration described above to support hybrid solutions. When configured to 'CRI, RI and i1 (cri-RI-i1)', the UE can report to the base station a first CSI report including PMI including a single wideband indication (i.e., i1) for all CSI reporting bands using the Type 1 Single Panel codebook. The base station can generate a coarse beam toward the UE through this. And, for example, the UE can provide a second CSI report to the base station using 'CRI, RI, PMI and CQI (cri-RI-PMI-CQI)' with the Type 2 Port Selection codebook. The partial PMI of the first CSI report can be used to beamform the CSI-RS, and this CSI-RS can be used to generate the full PMI for the second CSI report.
- 'CRI and RSRP (cri-RSRP)': This can be used for beam management procedures. In this case, a UE can report up to 4 CRIs along with up to 4 Layer 1 RSRP measurements.

- 'SSB Index and RSRP (ssb-Index-RSRP)': This can be used for beam management procedures. In this case, a UE can report up to 4 SSBRIs (SS/PBCH Block Resource Indicators) along with up to 4 Layer 1 RSRP measurements.

Hereinafter, in the description of the present disclosure, OL CSI report/feedback may mean CSI report/feedback that does not include a PMI (and also includes am RI and a CQI). Furthermore, CL CSI report/feedback may mean CSI report/feedback that includes a PMI (or further includes an LI) (and also further includes an RI and a CQI (and an LI)). Furthermore, semi-OL CSI report/feedback may mean report/CSI feedback that includes only a partial PMI (e.g., a wideband partial PMI, $i_1$) (or includes an RI and a CQI).

As described above, according to the existing LTE/NR standard, when a UE reports CSI, a method of reporting only a part of an entire PMI index (e.g., wideband partial PMI, $i_1$) or not reporting a PMI (i.e., semi-OL CSI feedback) is supported for a PMI among RI/PMI/CQI.

For example, in LTE, a PMI is not reported, and a UE can randomly select a precoder of a fixed subset of the PMI from frequency/time resources (e.g., by cycling the precoder of the PMI subset) to calculate and report RI/CQI. In NR, only $i_1$ (i.e., wideband PMI) among the two indices $i_1$/$i_2$ that constitute PMI can be reported. In this case, the UE can randomly select a precoder corresponding to a subset of $i_2$ configured by the base station as RRC (e.g., by typeI-SinglePanel-codebookSubsetRestriction-i2) from frequency/time resources (e.g., by cycling the precoder of the PMI subset) to calculate and report RI/CQI. Here, a codebook subset (or precoder subset) can be configured via a bitmap (e.g., typeI-SinglePanel-codebookSubsetRestriction-i2) consisting of bit sequences of $b_{15}, ..., b_1, b_0$, where $b_0$ is the least significant bit (LSB) and $b_{15}$ is the most significant bit (MSB). $b_i$ is associated with a precoder corresponding to a codebook index $i_2=i$. If $b_i$ is 0, the randomly selected precoder for CQI calculation may not correspond to any precoder associated with $b_i$.

When a UE is configured with a CSI reporting configuration (CSI-ReportConfig) with the higher layer parameter reportQuantity set to 'cri-RI-i1', the UE may expect the higher layer parameter 'codebookType' set to 'Type 1 Single Panel (typeI-SinglePanel)' and the higher layer parameter 'PMI Format Indicator (pmi-FormatIndicator)' set to 'widebandPMI', for the corresponding CSI reporting configuration. Additionally, the UE may report a PMI consisting of a single wideband indication (i.e., $i_1$) for an entire CSI reporting band.

When a UE is configured with a CSI reporting configuration (CSI-ReportConfig) with the higher layer parameter reportQuantity set to 'cri-RI-i1-CQI', the UE may expect the higher layer parameter 'codebookType' set to 'Type 1 Single Panel (typeI-SinglePanel)' and the higher layer parameter 'PMI Format Indicator (pmi-FormatIndicator)' set to 'widebandPMI', for the corresponding CSI reporting configuration. In addition, the UE may report a PMI consisting of a single wideband indication (i.e., $i_1$) for an entire CSI reporting band. Here, a CQI may be calculated conditionally on the reported $i_1$, assuming PDSCH transmission using $N_P \geq 1$ precoders (i.e., precoders corresponding to the same $i_1$ but different $i_2$). Additionally, the UE can assume that one precoder is randomly selected from the $N_P$ set. Here, a PRG (precoding resource block group) size for CQI calculation can be configured by the higher layer parameter 'PDSCH bundling size for CSI (pdsch-BundleSizeForCSI)'.

This feedback scheme is intended to report robust CSI by applying precoder random selection (e.g., precoder cycling) in environments where channel estimation is inaccurate or the channel changes rapidly.

Embodiment 1: A UE may report only some of the multiple indexes (e.g., $i_1$ that constitute a PMI, and may configure a PMI set (or a precoder set or a cycling set) for the remaining indexes by itself.

In the future, AI/ML functions may be applied to a UE/base station to optimize a precoder (or cycling precoder) applied to such semi-OL CSI reporting/feedback, and DL scheduling of a base station may be optimized through additional CSI quantity reporting.

A UE (supporting AI/ML functions) may report only some of the multiple indexes that constitute a PMI (e.g., $i_1$), and may configure a precoder set (or cycling set) for the remaining indexes by itself. The UE may calculate RI/CQI by randomly selecting (or cycling) a precoder according to a (precoding) resource unit determined by itself for the precoder set (or cycling set) (i.e., assuming downlink transmission with a randomly selected precoder). For example, for an estimated channel, a UE may report $i_1$ (i.e., report CSI including $i_1$), determine $i_2$ (e.g., 1, 2, 3, 4) by itself, and may also determine a precoding resource unit (e.g., 1 RB) by itself.

Accordingly, in addition to the existing RI/i1/CQI (i.e., CSI) determined by the existing semi-OL CSI reporting method (or determined by the existing closed loop CSI reporting/feedback method), the RI'/$i_1$'/CQI' (i.e., CSI') calculated by the proposed method can be calculated/derived, and a UE can report the two CSIs together. That is, the UE can report the two CSIs calculated/derived by different CSI reporting/feedback modes/methods together to a base station. Here, the existing closed loop CSI reporting/feedback method may mean a method in which a UE calculates a complete PMI from a codebook and calculates an RI and a CQI accordingly.

When two CSIs calculated/derived with different CSI reporting/feedback modes/methods are reported together to a base station, a UE can additionally calculate a difference value of CSI' based on the existing CSI (or vice versa) and report it to reduce the feedback overhead. For example, if it is always assumed that RI'=RI, i1=i1' among CSI' (for example, RI, $i_1$ are unlikely to differ significantly), a UE does not report RI', i1' to a base station, and the UE can report only the difference (for example, delta) between the CQI' and the CQI to the base station, and as a result, the UE can report RI/i1/CQI/ (delta) CQI' to the base station. The payload size of this difference value can also be directly determined by the UE, and the UE can report the determined payload size to the base station. For example, if the difference between the CQI' and the CQI is large, it is desirable to increase the payload size and report the difference value in more detail.

Alternatively, a UE may compare CSI and CSI' and report a part (/entire) of the CSI as a replacement for a part (/entire) of the CSI'. For example, if CQI and CQI' are compared and the CQI' is greater than the CQI, the CQI may be replaced with the CQI' and RI/$i_1$/CQI' may be reported to a base station. In this way, information on whether a part of CSI is replaced may be additionally reported to the base station (i.e., explicitly together with CSI or implicitly separately from CSI). For example, a UE may additionally report a 1-bit value along with RI/i1/CQI and report to a base station how the corresponding CSI is calculated (i.e., which CSI reporting/feedback mode/method the CSI is calculated in) depending on whether the 1-bit value is 0/1. For example, a UE can decide on its own which CSI to report between the CSI calculated in a conventional manner and the CSI calculated in a new manner by the AI/ML-based UE, and report the decision result to a base station along with the CSI.

Meanwhile, in the semi OL CSI scheme that does not report a PMI at all, a UE can report only RI/CQI to a base station without even reporting $i_1$ or $i_1$' to the base station. Here, the existing UE can calculate RI/CQI using a fixed (predetermined or preconfigured) PMI. On the other hand, in the case of a UE supporting AI/ML functions, even the corresponding PMI can be determined by itself to calculate RI'/CQI', and the calculated RI'/CQI' can be reported in combination with the proposed method of the present disclosure (i.e., together or additionally separately).

A base station that has received the CSI' can estimate and identify the PMI set (or precoder set or cycling set) and precoding resource unit (or cycling resource unit) (and various other CSI-related values determined by a UE) determined by a UE itself through AI/ML techniques. By feeding back the estimated values to the UE, the UE and/or the base station can compare the values estimated by the base station and the values determined by the UE. If the difference is large (for example, if it exceeds a predetermined/preconfigured threshold), the UE and/or the base station can update or retrain the AI/ML model to improve the accuracy. As a result, a base station can restrict a range of precoding resource units (or cycling resource unit) and PMI indexes (i.e., a range of indexes for a PMI set (or precoder set or cycling set)) to a UE.

Alternatively, a UE may report to a base station a PMI set (or a precoder set or a cycling set) and a precoding resource unit (or a cycling resource unit) determined by the UE itself. In this case, the UE and/or the base station may compare a value estimated by the base station with a value determined by the UE. If the difference is large (e.g., exceeds a predetermined/preconfigured threshold), the UE and/or the base station may update or retrain the AI/ML model to improve the accuracy.

The above embodiment 1 may correspond to a joint AI/ML model in which both a base station and a UE must be able to predict/determine a PMI set (or a precoder set or a cycling set) and a precoding resource unit (or a cycling resource unit), and the following input/output parameters may be considered for the joint AI/ML model.

However, the parameters exemplified below are only examples, and the proposed method described above and the input/output parameters described below can be applied to the joint AI/ML model, an AL/ML (gNB side AI/ML) model of a base station, and an AL/ML (UE side AI/ML) model of a UE.

A. Parameters used in base station

i) Input parameters for AI/ML model

- Time varying channel characteristics (e.g., channel Doppler shift/spread, UE speed)
- Frequency selective channel characteristics (e.g., delay spread, average delay)
- Estimated DL channel from SRS (i.e., DL reciprocity channel from UL estimated channel)

ii) Output parameters for AI/ML model

- PMI set (or precoder set or cycling set)
- Precoding resource unit (or cycling resource unit)
- Restrictions on PMI set (or precoder set or cycling set) or precoding resource unit (or cycling resource unit)

B. Parameters used in UE

i) Input parameters for AI/ML model

- Time varying channel characteristics (e.g. channel Doppler shift/spread, UE speed)
- Frequency selective channel characteristics (e.g. delay spread, average delay)
- Estimated channel from CSI-RS (i.e. from channel measurement resource (CMR))
- Estimated interference from ZP/NZP CSI-RS (i.e. from interference measurement resource (IMR))
- Restriction on PMI set (or precoder set or cycling set) or precoding resource unit (or cycling resource unit)

ii) Output parameters for AI/ML model

- PMI set (or precoder set or cycling set)
- Precoding resource unit (or cycling resource unit)
- Payload size for reporting the difference between CSI (CSI according to the existing CL CSI reporting method) and CSI' (CSI according to the proposed method)
- Determining which CSI to report among CSI (CSI according to the existing CL CSI reporting method) and CSI' (CSI according to the proposed method)

As an example of the above-described 'precoding resource unit (or cycling resource unit)', it can be determined as a physical resource block (PRB) bundling size (PRB bundling size) or a multiple of the PRB bundling size. In addition, for efficient application of the proposed method of the present disclosure, a more dynamic PRB bundling size configuration/indication (e.g., via MAC-CE (control element) and/or DCI) can be introduced.

In addition, the above-described 'precoding resource unit (or cycling resource unit)' is not limited to a frequency resource unit and may be configured as a time resource unit. The time resource unit may be configured/determined at a symbol (or symbol group) level, and a different precoder may be randomly selected (e.g., selected by cycling) for each time resource unit to calculate CSI.

Embodiment 2: A UE can determine by itself a payload size or a value of a codepoint (or a difference value between the codepoints) representing a difference value for reporting a difference value between wideband (WB) CSI and subband (SB) CSI.

CSI can be classified into SB CSI and WB CSI according to frequency granularity. Here, SB CSI has higher accuracy and higher feedback overhead than WB CSI because optimized CSI for each subband is individually reported.

Each SB CSI is reported as a difference value based on WB CSI. Here, a UE can directly determine a payload size (defined as 2 bits in the current standard) for reporting a difference value between SB CSI and WB CSI. In addition, a UE can report the determined payload size to a base station. For example, if the difference between WB CSI and SB CSI is large, it is desirable to increase the payload size and report the difference value in more detail.

In addition, a UE can determine by itself a value of each codepoint representing a difference value between SB CSI and WB CSI. In addition, a UE can report the determined value of each codepoint (or the difference between codepoint values) to a base station. For example, in case of reporting the difference value with 2 bits, the values of 00, 01, 10, and 11 can be determined as -1, 0, 1, >1 (i.e., greater than 1), or -2, 0, 2, >2 (i.e., greater than 2), respectively.

Embodiment 3: A UE can determine a frequency CSI reporting/feedback method according to density of a reference signal (RS) in a corresponding frequency region.

A RS designed in the current standard has constant RS density in a frequency domain, but a RS designed for UE supporting AI/ML functions may have low RS density or no RS in some frequencies/SB (subband) /RB (resource block) or may have high RS density in some frequencies/SB/RB. In this way, RS density may be uneven in a frequency domain, which may result in lower RS signaling overhead.

For example, in a frequency region where a low density RS is configured, a UE may have low channel estimation accuracy. In this way, in cases where the channel estimation accuracy is low, a semi-OL CSI feedback method that sends some indexes of a PMI and randomly selects (e.g., selects by cycling) the remaining indexes or does not send a PMI at all may be more effective than a closed loop CSI feedback method that selects/reports one complete PMI from a codebook. Therefore, for a frequency region where a low density RS is configured (e.g., SB), a UE can transmit semi-OL CSI (i.e., using the semi-OL CSI reporting method/mode) (i.e., since the low density RS frequency region has low density, the channel estimation accuracy is lowered even if the UE transmits closed loop CSI.). On the other hand, for a frequency region where a high density RS is configured (e.g., SB), a UE can transmit closed loop CSI (i.e., using the closed loop CSI reporting method/mode).

In the case of an AI/ML UE, high channel estimation accuracy can generally be maintained even for a frequency region with low RS density, but channel estimation accuracy may be reduced depending on AI/ML model, parameter setting, training, etc., and also depending on the instantaneous channel environment. An AI/ML UE can predict the accuracy of the channel it has measured, and can feed back semi-OL CSI for a frequency region (e.g., SB) with low accuracy (e.g., below/below a predetermined/preconfigured threshold), and can feed back closed loop CSI for a frequency region with high accuracy (e.g., above/beyond a predetermined/preconfigured threshold). In addition, a UE can report information on a frequency region to which semi-OL CSI has been fed back and a frequency region to which closed loop CSI has been fed back to a base station together.

And/or, the above operation can be performed for the time domain as well. For example, if a time of performing a CSI report or a time of a CSI reference resource differs significantly from the channel measurement time (e.g., more than N symbols/slots), a UE can consider the measured channel to be outdated and feed back semi-OL CSI, otherwise, the UE can consider the measured channel to be fresh and feed back closed CSI.

Here, a CSI reference resource may mean a frequency and time unit (i.e., resource) that a UE assumes is allocated/transmitted when calculating/deriving CSI, and may be defined as follows. For example, a CSI reference resource for a serving cell may be defined as a group of downlink physical resource blocks (PRBs) corresponding to a band related to CSI derived in a frequency domain, and a CSI reference resource for CSI reporting in uplink slot n' in a time domain may be defined by a single downlink slot.

Alternatively, a UE may determine the accuracy of the measured channel and feed back semi-OL CSI for a time domain with low accuracy (e.g., a time at which CSI reporting is performed, or the time of a CSI reference resource, or a time domain where the channel represented by CSI is located), and feed back closed loop CSI for a time domain with high accuracy.

For the proposed operation, the following input/output parameters may be considered for an AI/ML model of a UE.

However, the parameters exemplified below are only examples, and the proposed method described above and the input/output parameters described below can be applied to a joint AI/ML model, an AL/ML (gNB side AI/ML) model of a base station, and an AL/ML (UE side AI/ML) model of a UE.

A. Parameters used in UE

i) Input parameters for the AI/ML model

- Time varying channel characteristics (e.g., channel Doppler shift/spread, UE speed)
- Frequency selective channel characteristics (e.g., delay spread, average delay)
- Estimated channel from CSI-RS (i.e., from CMR)
- Estimated interference from ZP/NZP CSI-RS (i.e., from IMR)
- Restrictions on PMI set (or precoder set or cycling set) or precoding resource unit (or cycling resource unit)
- CSI-RS pattern (e.g., RE position, period, transmission slot/symbol)

ii) Output parameters for AI/ML model

- Channel accuracy for each frequency region (and/or time region) measured from CMR
- Determining which CSI to report in each frequency domain (and/or time domain) among CL CSI or semi OL CSI

Embodiment 4: A UE may report to a base station, including in CSI feedback information, which mode/method it assumed among a semi OL CSI reporting mode/method, a CL (closed loop) CSI reporting mode/method, or "a CSI reporting mode/method that is a hybrid of semi OL and CL CSI depending on frequency and/or time domain."

CSI can be divided into CSI part 1 (or I) and CSI part 2 (or II), and Table 6 illustrates the mapping of CSI fields of CSI part 1 and one CSI report.

[Table 6]

| CSI Report Number | CSI Fields |
|---|---|
| CSI report #n | CRI |
| | RI |

(continued)

| CSI Report Number | CSI Fields |
|---|---|
| CSI part 1 | Wideband CQI for the first TB |
| | Indicator of the number of non-zero wideband amplitude coefficients M0 for Layer 0 |
| | Indicator of the number of non-zero wideband amplitude coefficients M1 for Layer 1 (if rank is equal to 1 according to the reported RI, this field is set to all zeros.) |
| | Indicator of the total number of non-zero coefficients $K^{NZ}$ summed over all layers |
| The subbands of a given CSI report n, as indicated by the higher layer parameter csi-ReportingBand, are numbered sequentially in ascending order, with the lowest subband csi-ReportingBand being subband 0. | |

Information on the CSI reporting mode/method described above may be reported by including it in CSI part 1 where the payload size does not dynamically change. Alternatively, a base station may configure a mode to a UE.

When the semi OL CSI mode or the mixed mode of semi OL and CL is selected, there may be an unused uplink control information (UCI) payload remaining in a PUCCH/PUSCH, which is a UL resource allocated by a base station for CSI reporting. For example, since a PMI is encoded in CSI part 2 and the CL CSI reporting mode/scheme transmits an entire PMI, the CSI may be transmitted using the entire payload allocated for CSI part 2. On the other hand, in the semi OL CSI reporting mode/scheme, since some indexes of a PMI are reported or a PMI is not reported at all, a payload allocated for CSI part 2 may remain. This remaining payload portion may be used for zero padding (i.e., mapping to 0) or for additionally reporting other CSI information (i.e., CSI information other than PMI).

In addition, when the mixed CSI reporting mode/method of semi OL and CL (as suggested above) is selected, the number of CSIs to which semi OL CSI is applied and the number of CSIs to which CL CSI is applied can change dynamically. For example, when reporting CSI for 10 SBs, semi OL CSI can be applied to SB 1 and 2 and CL CSI can be applied to the remaining SBs. Alternatively, semi OL CSI can be applied to SB 1,2,3 and 4 and CL CSI can be applied to the remaining SBs. In this way, as the number of semi OL CSIs increases, the overhead for PMI reporting decreases, and thus a UCI payload size of CSI part 2 can be reduced. In this case, a UE can report information such as the number/ratio of semi OL CSI in the total CSI (or the number/ratio of CL CSI or a ratio between semi OL CSI and CL CSI) in CSI part 1. By doing this, a base station can calculate a payload size of a PMI in CSI part 2.

For the above proposed operation, the following input/output parameters may be considered for an AI/ML model of a UE.

However, the parameters exemplified below are only examples, and the proposed method described above and the input/output parameters described below may be applied to a joint AI/ML model, an AL/ML (gNB side AI/ML) model of a base station, and an AL/ML (UE side AI/ML) model of a UE.

A. Parameters used in UE

i) Input parameters for AI/ML model

- Time varying channel characteristics (e.g., channel Doppler shift/spread, UE speed)
- Frequency selective channel characteristics (e.g., delay spread, average delay)
- Channel estimated from CSI-RS (i.e., from CMR)
- Interference estimated from ZP/NZP CSI-RS (i.e., from IMR)
- Accuracy of each channel in each frequency region (and/or time region) measured from CMR

ii) Output parameters for AI/ML model

- Select which mode/method to use among a semi OL CSI mode/method, a CL (closed loop) CSI mode/method, or a CSI mode/method that is a mixture of semi OL and CL CSI depending on a frequency/time region.

Meanwhile, in the description of the proposed method according to the above-described embodiments 1 to 4, the semi-OL CSI feedback was mainly described for the convenience of explanation, but the proposed method according to the above-described embodiments 1 to 4 can be extended and applied to a general CSI feedback method.

In addition, the proposed method according to the above-described embodiment 1 corresponds to a method of reporting only some of the multiple indexes that constitute the PMI (e.g., $i_1$) and configuring a PMI set (or a precoder set or a cycling set) for the remaining indexes. However, if a UE configures the PMI set (or the precoder set or the cycling set) with only one PMI, the CSI may be calculated and reported based only on the corresponding PMI, rather than the UE's arbitrary selection being applied. In this case, the proposed method according to the above-described embodiment 1 may also be applied. Alternatively, the UE may not report any PMI at all (i.e., may not even report $i_1$), and in this case, the proposed method according to the above-described embodiment 1 may also be applied.

In addition, the proposed methods according to the above-described embodiments 1 to 4 may be independently applied with only one proposed method, or may be finally applied through a combination/combination of two or more proposed methods.

In addition, whether or not to apply the proposed methods according to the above-described embodiments 1 to 4 can be indicated by a base station to a UE through signaling such as RRC/MAC-CE/DCI.

FIG. 17 is a diagram illustrating a signaling procedure between a network and a UE for a method for transmitting and receiving channel state information according to an embodiment of the present disclosure.

FIG. 17 illustrates signaling between a network (e.g., TRP 1, TRP 2) and a UE to which the methods (e.g., Embodiments 1 to 4, a combination of one or more of the proposed methods in Embodiments 1 to 4) proposed in the present disclosure can be applied. Here, a UE/network is only an example and can be substituted with various devices. FIG. 17 is only for convenience of explanation and does not limit the scope of the present disclosure. In addition, some step(s) illustrated in FIG. 17 may be omitted depending on the situation and/or setting.

The signaling method described in FIG. 17 can be extended and applied to signaling between multiple TRPs and multiple UEs. In the following description, a network may be one base station including multiple TRPs, and may be one cell including multiple TRPs. For example, an ideal/non-ideal backhaul may be configured between TRP 1 and TRP 2 that constitute a network. In addition, the following description is based on multiple TRPs, but it can be equally extended and applied to transmission through multiple panels. In addition, in the present disclosure, an operation of a UE receiving a signal from TRP1/TRP2 can also be interpreted/described as (or can be an operation of) an operation of a UE receiving a signal from a network (via/using TRP1/2), and an operation of a UE transmitting a signal to TRP1/TRP2 can also be interpreted/described as (or can be an operation of) an operation of a UE transmitting a signal to a network (via/using TRP1/TRP2), and vice versa.

A base station may be a general term for an object that performs data transmission and reception with a UE. For example, a base station may be a concept including one or more TPs (Transmission Points), one or more TRPs (Transmission and Reception Points), etc. In addition, a TP and/or TRP may include a panel, a transmission and reception unit, etc. of a base station. In addition, "TRP" may be applied by substituting it with expressions such as panel, antenna array, cell (e.g., macro cell / small cell / pico cell, etc.), transmission point, base station (gNB, etc.). As described above, TRPs can be distinguished based on information (e.g., index, ID) about the CORESET group (or CORESET pool). As described above, TRPs can be distinguished based on information (e.g., index, ID) on a CORESET group (or CORESET pool). For example, if one UE is configured to perform transmission and reception with multiple TRPs (or cells), this may mean that multiple CORESET groups (or CORESET pools) are configured for one UE. Such configuration of CORESET groups (or CORESET pools) can be performed via higher layer signaling (e.g., RRC signaling, etc.).

A UE receives configuration information from a network (S1701).

The configuration information may include information related to network configuration (e.g., TRP configuration) / information related to M-TRP-based transmission and reception (e.g., resource allocation, etc.). Here, the configuration information may be transmitted through higher layer signaling (e.g., RRC signaling, MAC-CE, etc.).

The configuration information may include configuration information related to CSI described in the above-described proposed methods (e.g., Embodiments 1 to 4, a combination of one or more of the proposed methods in Embodiments 1 to 4).

The configuration information related to CSI may include at least one of information related to CSI-IM (interference management) resource, information related to CSI measurement configuration, information related to CSI resource configuration, or information related to CSI report configuration.

Here, the configuration information related to CSI may include configuration information related to CSI reporting (i.e., CSI report configuration) (e.g., RRC IE 'CSI-ReportConfig') (hereinafter, first configuration information) and configuration information related to the CSI resource (i.e., CSI resource configuration) (e.g., RRC IE 'CSI-ResourceConfig') (hereinafter, second configuration information).

Here, multiple CSI-RS resources for CSI calculation/measurement can be configured for a UE by configuration information related to CSI resources (i.e., CSI resource settings). Additionally, one or more channel measurement resources (CMR) (e.g., NZP CSI-RS) and/or one or more interference measurement resources (IMR) (e.g., CSI-IM and/or NZP CSI-RS) may be configured by configuration information related to the CSI resource (i.e., CSI resource settings). CMR and IMR may be collectively referred to as CSI resources.

Additionally, configuration information related to CSI resources (i.e., CSI resource settings) may be linked/as-

24

sociated with configuration information related to a specific CSI report (i.e., CSI report settings).

A UE receives a CSI-RS from one or more CSI resources configured by configuration information (e.g., CSI resource configuration) from the network (S1702).

Here, according to the above-described embodiment 3, the CSI-RS may have different densities in the frequency region (e.g., subbands, resource blocks, resource block groups) by frequency domain (i.e., the number of CSI-RS resources may be different).

A UE may receive downlink control information (DCI) from a network (S1703).

Here, the DCI may be DCI that triggers aperiodic CSI reporting to a UE, or may be DCI that activates semi-persistent CSI reporting.

In addition, the DCI may be transmitted via a downlink control channel (e.g., PDCCH, etc.), and may schedule a downlink data channel (e.g., PDSCH)/uplink data channel (e.g., PUSCH) in addition to triggering/activating CSI reporting.

A UE transmits (reports) CSI to a network (S1704).

Here, the CSI may include at least one of CQI, PMI, RI, CRI, and LI.

As described above, a UE can report CSI to a network based on the configuration information related to CSI reporting (and according to trigger/activation by DCI). For example, a CSI reporting type, such as periodic CSI reporting, semi-persistent CSI reporting, and aperiodic CSI reporting, can be configured by the configuration information related to CSI reporting, and in case of periodic CSI reporting, a periodicity and a slot offset, etc. can also be configured.

According to the embodiment 4 described above, a UE can assume a specific CSI reporting mode to calculate CSI, and in this case, the CSI can include information on a CSI reporting mode assumed by a UE to calculate the CSI.

For example, a PMI may include a plurality of indexes for identifying a precoding matrix (e.g., indexes $i_1$ and $i_2$ for identifying a precoding matrix in a predefined codebook), and the CSI reporting mode may be determined as one of: i) a first CSI reporting mode (i.e., a CL CSI reporting mode) in which the CSI includes the plurality of indexes, ii) a second CSI reporting mode (i.e., a semi OL CSI reporting mode) in which the CSI includes only some indexes (e.g., a single wideband indication for an entire CSI reporting band, $i_1$) from the plurality of indices, iii) a third CSI reporting mode in which the CSI is mixed with the first CSI reporting mode and the second CSI reporting mode in a frequency and/or time domain (i.e., a CSI reporting mode in which CL CSI and semi OL CSI are mixed).

In addition, when the CSI reporting mode is determined as either the second CSI reporting mode or the third CSI reporting mode, a portion of a payload allocated for the CSI that is not used according to the CSI reporting mode may be zero padded or used for reporting additional information other than a PMI.

In addition, when the CSI reporting mode is determined as the third CSI reporting mode, the CSI may include information on a ratio of information according to the first CSI reporting mode and/or information according to the second CSI reporting mode.

Meanwhile, the operation of determining the CSI reporting mode can be performed by the UE (or an external device mounted or connected to the UE), and for this purpose, at least one of the functions for the AI/ML operation of FIG. 12 described above (particularly, model training, model inference) can be performed by the UE (or an external device mounted or connected to the UE).

In addition, according to the above-described embodiment 3, when density of the CSI-RS is different for each frequency region (e.g., subband, resource block, resource block group) in a frequency domain, the CSI reporting mode may be determined based on the density of the CSI-RS for each frequency region. In addition, accuracy of channel measurement for each frequency region is predicted by a UE in a frequency domain, and the CSI reporting mode may be determined based on the accuracy of the channel measurement for each frequency region.

Additionally, the CSI reporting mode may be determined based on i) a difference between a reporting time of the CSI and a channel measurement time in the time domain or ii) a difference between a CSI reference resource and the channel measurement time.

Meanwhile, the operation of determining the CSI reporting mode according to a frequency region and/or time region may be performed by the UE (or an external device mounted on or connected to the UE), and for this purpose, at least one of the functions for the AI/ML operation of FIG. 12 described above (in particular, model training, model inference) may be performed by the UE (or an external device mounted on or connected to the UE) .

In addition, according to the embodiment 1, based on the CSI reporting mode being determined as the second CSI reporting mode, the CSI may include some of the indexes constituting the PMI, an RI, and a CQI, and the CQI may be calculated by applying a precoder randomly selected from a precoder set determined by the UE for each resource unit determined by the UE (i.e., the CQI may be calculated assuming downlink transmission with a randomly selected precoder).

In addition, based on the CSI including both first CSI according to the first CSI reporting mode and second CSI according to the second CSI reporting mode, the second CSI can be reported only as a difference value with the first CSI.

Meanwhile, the operation of determining the PMI set (or precoder set, cycling set) and/or the operation of determining the precoding resource unit (or cycling resource unit) may be performed by the UE (or an external device mounted on or connected to the UE), and for this purpose, at least one of the functions for the AI/ML operation of the above-described FIG. 12 (particularly, model training, model inference) may be performed by the UE (or an external device mounted on or connected to the UE). In addition, the UE (or an external device mounted on or connected to the UE) may also determine the PMI set (or precoder set, cycling set) and/or the precoding resource unit (or cycling resource unit) through the procedure of the above-described FIG. 16 (particularly, 5. Model inference).

In addition, according to the embodiment 2, the CSI may include WB CSI and SB CSI, and a payload size for reporting a difference value between the SB CSI and the WB CSI is determined by the UE, and the CSI may include information on the payload size.

In addition, the CSI may include WB CSI and SB CSI, and each codepoint value indicating a difference value between the SB CSI and the WB CSI is determined by the UE, and the CSI may include information on the each codepoint value.

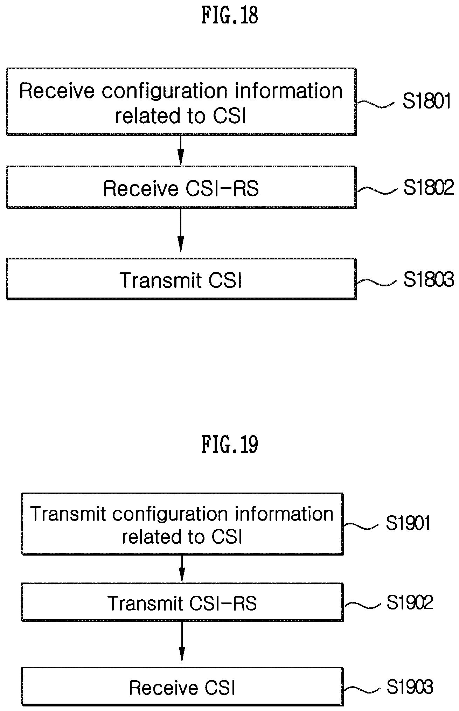

FIG. 18 is a diagram illustrating an operation of a UE for a method for transmitting and receiving channel state information according to an embodiment of the present disclosure.

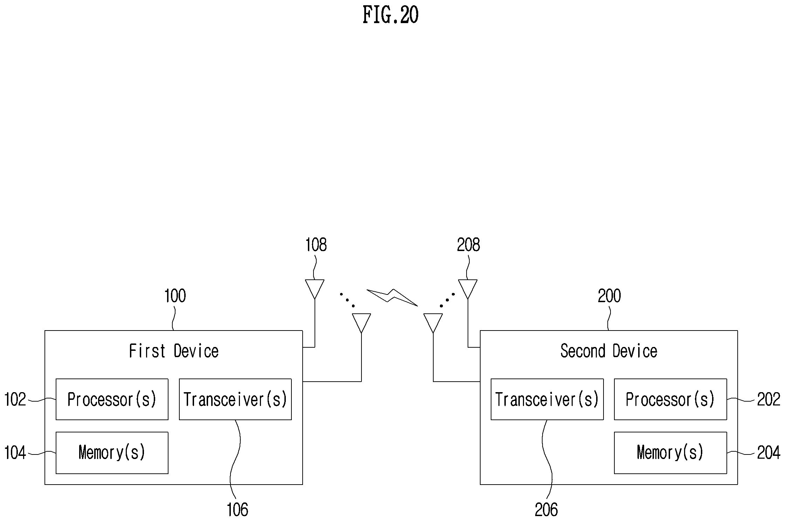

Referring to FIG. 18, FIG. 18 illustrates an operation of a UE based on the proposed methods (For example, Embodiments 1 to 4, a combination of one or more of the proposed methods in Embodiments 1 to 4). The example of FIG. 18 is for convenience of explanation and does not limit the scope of the present disclosure. Some step(s) illustrated in FIG. 18 may be omitted depending on the situation and/or setting. In addition, a UE in FIG. 18 is only an example and may be implemented as a device illustrated in FIG. 20 below. For example, the processor (102/202) of FIG. 20 may control the transceiver (106/206) to transmit and receive channels/signals/data/information, etc., and may also control to store the transmitted or received channels/signals/data/information, etc. in the memory (104/204).

In addition, an operation of FIG. 18 may be processed by one or more processors (102, 202) of FIG. 20, and an operation of FIG. 18 may be stored in a memory (e.g., one or more memories (104, 204) of FIG. 20) in the form of a command/program (e.g., an instruction, an executable code) for driving at least one processor (e.g., 102, 202) of FIG. 20.

A UE receives configuration information related to channel state information (CSI) from a base station (S1801).

The configuration information related to CSI may include configuration information related to CSI described in the above-described proposed methods (e.g., Embodiments 1 to 4, a combination of one or more of the proposed methods in Embodiments 1 to 4).

The configuration information related to CSI may include at least one of information related to CSI-IM (interference management) resource, information related to CSI measurement configuration, information related to CSI resource configuration, or information related to CSI report configuration.

Here, the configuration information related to CSI may include configuration information related to CSI reporting (i.e., CSI report configuration) (e.g., RRC IE 'CSI-ReportConfig') (hereinafter, first configuration information) and configuration information related to the CSI resource (i.e., CSI resource configuration) (e.g., RRC IE 'CSI-ResourceConfig') (hereinafter, second configuration information).

Here, multiple CSI-RS resources for CSI calculation/measurement can be configured for a UE by configuration information related to CSI resources (i.e., CSI resource settings). Additionally, one or more channel measurement resources (CMR) (e.g., NZP CSI-RS) and/or one or more interference measurement resources (IMR) (e.g., CSI-IM and/or NZP CSI-RS) may be configured by configuration information related to the CSI resource (i.e., CSI resource settings). CMR and IMR may be collectively referred to as CSI resources.

In addition, configuration information related to CSI resources (i.e., CSI resource settings) may be linked/associated with configuration information related to a specific CSI report (i.e., CSI report settings).

A UE receives CSI-RS from one or more CSI resources configured by configuration information (e.g., CSI resource settings) (S1802).

Here, according to the above-described embodiment 3, the CSI-RS may have different densities in the frequency region (e.g., subbands, resource blocks, resource block groups) by frequency domain (i.e., the number of CSI-RS resources may be different).

Although not shown in FIG. 18, a UE may receive downlink control information (DCI) from a base station. Here, the DCI may be DCI that triggers aperiodic CSI reporting to a UE, or may be DCI that activates semi-persistent CSI reporting. In addition, the DCI may be transmitted over a downlink control channel (e.g., PDCCH, etc.), and may schedule a downlink data channel (e.g., PDSCH)/uplink data channel (e.g., PUSCH) in addition to triggering/activating CSI reporting.

A UE transmits (reports) CSI to a base station (S1803).

Here, the CSI may include at least one of CQI, PMI, RI, CRI, and LI.

As described above, a UE can report CSI to a network based on the configuration information related to CSI reporting (and according to trigger/activation by DCI). For example, a CSI reporting type, such as periodic CSI reporting, semi-persistent CSI reporting, and aperiodic CSI reporting, can be configured by the configuration information related to CSI reporting, and in case of periodic CSI reporting, a periodicity and a slot offset, etc. can also be configured.

According to the embodiment 4 described above, a UE can assume a specific CSI reporting mode to calculate CSI, and in this case, the CSI can include information on a CSI reporting mode assumed by a UE to calculate the CSI.

For example, a PMI may include a plurality of indexes for identifying a precoding matrix (e.g., indexes $i_1$ and $i_2$ for

identifying a precoding matrix in a predefined codebook), and the CSI reporting mode may be determined as one of: i) a first CSI reporting mode (i.e., a CL CSI reporting mode) in which the CSI includes the plurality of indexes, ii) a second CSI reporting mode (i.e., a semi OL CSI reporting mode) in which the CSI includes only some indexes (e.g., a single wideband indication for an entire CSI reporting band, $i_1$) from the plurality of indices, iii) a third CSI reporting mode in which the CSI is mixed with the first CSI reporting mode and the second CSI reporting mode in a frequency and/or time domain (i.e., a CSI reporting mode in which CL CSI and semi OL CSI are mixed).

In addition, when the CSI reporting mode is determined as either the second CSI reporting mode or the third CSI reporting mode, a portion of a payload allocated for the CSI that is not used according to the CSI reporting mode may be zero padded or used for reporting additional information other than a PMI.

In addition, when the CSI reporting mode is determined as the third CSI reporting mode, the CSI may include information on a ratio of information according to the first CSI reporting mode and/or information according to the second CSI reporting mode.

Meanwhile, the operation of determining the CSI reporting mode can be performed by the UE (or an external device mounted or connected to the UE), and for this purpose, at least one of the functions for the AI/ML operation of FIG. 12 described above (particularly, model training, model inference) can be performed by the UE (or an external device mounted or connected to the UE).

In addition, according to the above-described embodiment 3, when density of the CSI-RS is different for each frequency region (e.g., subband, resource block, resource block group) in a frequency domain, the CSI reporting mode may be determined based on the density of the CSI-RS for each frequency region. In addition, accuracy of channel measurement for each frequency region is predicted by a UE in a frequency domain, and the CSI reporting mode may be determined based on the accuracy of the channel measurement for each frequency region.

Additionally, the CSI reporting mode may be determined based on i) a difference between a reporting time of the CSI and a channel measurement time in the time domain or ii) a difference between a CSI reference resource and the channel measurement time.

Meanwhile, the operation of determining the CSI reporting mode according to a frequency region and/or time region may be performed by the UE (or an external device mounted on or connected to the UE), and for this purpose, at least one of the functions for the AI/ML operation of FIG. 12 described above (in particular, model training, model inference) may be performed by the UE (or an external device mounted on or connected to the UE) .

In addition, according to the embodiment 1, based on the CSI reporting mode being determined as the second CSI reporting mode, the CSI may include some of the indexes constituting the PMI, an RI, and a CQI, and the CQI may be calculated by applying a precoder randomly selected from a precoder set determined by the UE for each resource unit determined by the UE (i.e., the CQI may be calculated assuming downlink transmission with a randomly selected precoder).

In addition, based on the CSI including both first CSI according to the first CSI reporting mode and second CSI according to the second CSI reporting mode, the second CSI can be reported only as a difference value with the first CSI.

Meanwhile, the operation of determining the PMI set (or precoder set, cycling set) and/or the operation of determining the precoding resource unit (or cycling resource unit) may be performed by the UE (or an external device mounted on or connected to the UE), and for this purpose, at least one of the functions for the AI/ML operation of the above-described FIG. 12 (particularly, model training, model inference) may be performed by the UE (or an external device mounted on or connected to the UE). In addition, the UE (or an external device mounted on or connected to the UE) may also determine the PMI set (or precoder set, cycling set) and/or the precoding resource unit (or cycling resource unit) through the procedure of the above-described FIG. 16 (particularly, 5. Model inference).

In addition, according to the embodiment 2, the CSI may include WB CSI and SB CSI, and a payload size for reporting a difference value between the SB CSI and the WB CSI is determined by the UE, and the CSI may include information on the payload size.

In addition, the CSI may include WB CSI and SB CSI, and each codepoint value indicating a difference value between the SB CSI and the WB CSI is determined by the UE, and the CSI may include information on the each codepoint value.

FIG. 19 is a diagram illustrating an operation of a base station for a method for transmitting and receiving channel state information according to an embodiment of the present disclosure.

Referring to FIG. 19, FIG. 19 illustrates an operation of a base station based on the proposed methods (For example, Embodiments 1 to 4, a combination of one or more of the proposed methods in Embodiments 1 to 4). The example of FIG. 19 is for convenience of explanation and does not limit the scope of the present disclosure. Some step(s) illustrated in FIG. 19 may be omitted depending on the situation and/or setting. In addition, a base station in FIG. 19 is only an example and may be implemented as a device illustrated in FIG. 20 below. For example, the processor (102/202) of FIG. 20 may control the transceiver (106/206) to transmit and receive channels/signals/data/information, etc., and may also control to store the transmitted or received channels/signals/data/information, etc. in the memory (104/204).

In addition, an operation of FIG. 19 may be processed by one or more processors (102, 202) of FIG. 20, and an operation of FIG. 19 may be stored in a memory (e.g., one or more memories (104, 204) of FIG. 20) in the form of a command/program (e.g., an instruction, an executable code) for driving at least one processor (e.g., 102, 202) of FIG. 20.

A base station transmits configuration information related to channel state information (CSI) to a UE (S1901).

The configuration information related to CSI may include configuration information related to CSI described in the above-described proposed methods (e.g., Embodiments 1 to 4, a combination of one or more of the proposed methods in Embodiments 1 to 4).

The configuration information related to CSI may include at least one of information related to CSI-IM (interference management) resource, information related to CSI measurement configuration, information related to CSI resource configuration, or information related to CSI report configuration.

Here, the configuration information related to CSI may include configuration information related to CSI reporting (i.e., CSI report configuration) (e.g., RRC IE 'CSI-ReportConfig') (hereinafter, first configuration information) and configuration information related to the CSI resource (i.e., CSI resource configuration) (e.g., RRC IE 'CSI-ResourceConfig') (hereinafter, second configuration information).

Here, multiple CSI-RS resources for CSI calculation/measurement can be configured for a UE by configuration information related to CSI resources (i.e., CSI resource settings). Additionally, one or more channel measurement resources (CMR) (e.g., NZP CSI-RS) and/or one or more interference measurement resources (IMR) (e.g., CSI-IM and/or NZP CSI-RS) may be configured by configuration information related to the CSI resource (i.e., CSI resource settings). CMR and IMR may be collectively referred to as CSI resources.

In addition, configuration information related to CSI resources (i.e., CSI resource settings) may be linked/associated with configuration information related to a specific CSI report (i.e., CSI report settings).

A base station transmits a CSI-RS to a UE from one or more CSI resources configured by configuration information (e.g., CSI resource settings) (S1902).

Here, according to the above-described embodiment 3, the CSI-RS may have different densities in the frequency region (e.g., subbands, resource blocks, resource block groups) by frequency domain (i.e., the number of CSI-RS resources may be different).

Although not shown in FIG. 18, a base station can transmit downlink control information (DCI) to a UE. Here, the DCI may be DCI that triggers aperiodic CSI reporting to a UE, or may be DCI that activates semi-persistent CSI reporting. In addition, the DCI may be transmitted over a downlink control channel (e.g., PDCCH, etc.), and may schedule a downlink data channel (e.g., PDSCH)/uplink data channel (e.g., PUSCH) in addition to triggering/activating CSI reporting.

A base station receives CSI from a UE (S1903).

Here, the CSI may include at least one of CQI, PMI, RI, CRI, and LI.

As described above, CSI can be reported from a UE based on the configuration information related to CSI reporting (and upon triggering/activation by DCI). For example, a CSI reporting type, such as periodic CSI reporting, semi-persistent CSI reporting, and aperiodic CSI reporting, can be configured by the configuration information related to CSI reporting, and in case of periodic CSI reporting, a periodicity and a slot offset, etc. can also be configured.

According to the embodiment 4 described above, a specific CSI reporting mode may be assumed to compute CSI by a UE, and in this case, the CSI can include information on a CSI reporting mode assumed by a UE to calculate the CSI.

For example, a PMI may include a plurality of indexes for identifying a precoding matrix (e.g., indexes $i_1$ and $i_2$ for identifying a precoding matrix in a predefined codebook), and the CSI reporting mode may be determined as one of: i) a first CSI reporting mode (i.e., a CL CSI reporting mode) in which the CSI includes the plurality of indexes, ii) a second CSI reporting mode (i.e., a semi OL CSI reporting mode) in which the CSI includes only some indexes (e.g., a single wideband indication for an entire CSI reporting band, $i_1$) from the plurality of indices, iii) a third CSI reporting mode in which the CSI is mixed with the first CSI reporting mode and the second CSI reporting mode in a frequency and/or time domain (i.e., a CSI reporting mode in which CL CSI and semi OL CSI are mixed).

In addition, when the CSI reporting mode is determined as either the second CSI reporting mode or the third CSI reporting mode, a portion of a payload allocated for the CSI that is not used according to the CSI reporting mode may be zero padded or used for reporting additional information other than a PMI.

In addition, when the CSI reporting mode is determined as the third CSI reporting mode, the CSI may include information on a ratio of information according to the first CSI reporting mode and/or information according to the second CSI reporting mode.

Meanwhile, the operation of determining the CSI reporting mode can be performed by the UE (or an external device mounted or connected to the UE), and for this purpose, at least one of the functions for the AI/ML operation of FIG. 12 described above (particularly, model training, model inference) can be performed by the UE (or an external device mounted or connected to the UE).

In addition, according to the above-described embodiment 3, when density of the CSI-RS is different for each frequency region (e.g., subband, resource block, resource block group) in a frequency domain, the CSI reporting mode may be determined based on the density of the CSI-RS for each frequency region. In addition, accuracy of channel measurement for each frequency region is predicted by a UE in a frequency domain, and the CSI reporting mode may be determined based on the accuracy of the channel measurement for each frequency region.

Additionally, the CSI reporting mode may be determined based on i) a difference between a reporting time of the CSI and a channel measurement time in the time domain or ii) a difference between a CSI reference resource and the channel measurement time.

Meanwhile, the operation of determining the CSI reporting mode according to a frequency region and/or time region may be performed by the UE (or an external device mounted on or connected to the UE), and for this purpose, at least one of the functions for the AI/ML operation of FIG. 12 described above (in particular, model training, model inference) may be performed by the UE (or an external device mounted on or connected to the UE).

In addition, according to the embodiment 1, based on the CSI reporting mode being determined as the second CSI reporting mode, the CSI may include some of the indexes constituting the PMI, an RI, and a CQI, and the CQI may be calculated by applying a precoder randomly selected from a precoder set determined by the UE for each resource unit determined by the UE (i.e., the CQI may be calculated assuming downlink transmission with a randomly selected precoder).

In addition, based on the CSI including both first CSI according to the first CSI reporting mode and second CSI according to the second CSI reporting mode, the second CSI can be reported only as a difference value with the first CSI.

Meanwhile, the operation of determining the PMI set (or precoder set, cycling set) and/or the operation of determining the precoding resource unit (or cycling resource unit) may be performed by the UE (or an external device mounted on or connected to the UE), and for this purpose, at least one of the functions for the AI/ML operation of the above-described FIG. 12 (particularly, model training, model inference) may be performed by the UE (or an external device mounted on or connected to the UE). In addition, the UE (or an external device mounted on or connected to the UE) may also determine the PMI set (or precoder set, cycling set) and/or the precoding resource unit (or cycling resource unit) through the procedure of the above-described FIG. 16 (particularly, 5. Model inference).

In addition, according to the embodiment 2, the CSI may include WB CSI and SB CSI, and a payload size for reporting a difference value between the SB CSI and the WB CSI is determined by the UE, and the CSI may include information on the payload size.

In addition, the CSI may include WB CSI and SB CSI, and each codepoint value indicating a difference value between the SB CSI and the WB CSI is determined by the UE, and the CSI may include information on the each codepoint value.

General Device to which the Present Disclosure may be applied

FIG. 20 is a diagram which illustrates a block diagram of a wireless communication device according to an embodiment of the present disclosure.

In reference to FIG. 20, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs (Programmable Logic Device) or one or more FPGAs (Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor (s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving, from a base station, configuration information related to channel state information (CSI);

receiving, from the base station, a CSI reference signal (CSI-RS) on one or more CSI resources; and
transmitting, to the base station, the CSI based on the configuration information,
wherein the CSI includes information for a CSI reporting mode assumed by the UE to calculate the CSI.

2. The method of claim 1, wherein a precoding matrix indicator (PMI) includes a plurality of indexes for identifying a precoding matrix, and
wherein the CSI reporting mode is determined as one of i) a first CSI reporting mode in which the CSI includes the plurality of indexes, ii) a second CSI reporting mode in which the CSI includes only some indexes from the plurality of indices, and iii) a third CSI reporting mode in which the CSI is mixed with the first CSI reporting mode and the second CSI reporting mode according to a frequency and/or time domain.

3. The method of claim 2, wherein based on the CSI reporting mode being determined as one of the second CSI reporting mode or the third CSI reporting mode, an unused payload portion due to the CSI reporting mode in a payload allocated for the CSI is zero-padded or used for reporting additional information other than a PMI.

4. The method of claim 2, wherein based on the CSI reporting mode being determined as the third CSI reporting mode, the CSI includes information for a ratio of information for the first CSI reporting mode and/or information for the second CSI reporting mode.

5. The method of claim 2, wherein the CSI-RS has different densities for each frequency region in a frequency domain, and
wherein the CSI reporting mode is determined based on a density of the CSI-RS for each frequency region.

6. The method of claim 2, wherein accuracy of channel measurement is predicted for each frequency region in a frequency domain, and
wherein the CSI reporting mode is determined based on the accuracy of the channel measurement for each frequency region.

7. The method of claim 2, wherein the CSI reporting mode is determined based on i) a difference between a reporting time of the CSI and a channel measurement time or ii) a difference between a CSI reference resource and a channel measurement time in a time domain.

8. The method of claim 2, wherein based on the CSI reporting mode being determined as the second CSI reporting mode, the CSI includes some of indexes constituting the PMI, a rank indicator (RI) and a channel quality indicator (CQI), and
wherein the CQI is calculated by applying a precoder randomly selected from a precoder set determined by the UE to each resource unit determined by the UE.

9. The method of claim 2, wherein based on the CSI including both first CSI related to the first CSI reporting mode and second CSI related to the second CSI reporting mode, the second CSI is reported only as a difference value from the first CSI.

10. The method of claim 2, wherein the CSI includes wideband (WB) CSI and subband (SB) CSI, and
wherein a payload size for reporting a difference value between the SB CSI and the WB CSI is determined by the UE, and the CSI includes information for the payload size.

11. The method of claim 2, wherein the CSI includes wideband (WB) CSI and subband (SB) CSI, and
wherein each codepoint value indicating a difference value between the SB CSI and the WB CSI is determined by the UE, and the CSI includes information for the each codepoint value.

12. A user equipment (UE) operating in a wireless communication system, the UE comprising:

at least one transceiver for transmitting and receiving a wireless signal; and
at least one processor for controlling the at least one transceiver,
wherein the at least one processor configured to:

receive, from a base station, configuration information related to channel state information (CSI);
receive, from the base station, a CSI reference signal (CSI-RS) on one or more CSI resources; and
transmit, to the base station, the CSI based on the configuration information,

wherein the CSI includes information for a CSI reporting mode assumed by the UE to calculate the CSI.

13. At least one non-transitory computer-readable medium storing at least one instruction, wherein the at least one instruction executable by at least one processor controls a user equipment (UE) to:

receive, from a base station, configuration information related to channel state information (CSI);
receive, from the base station, a CSI reference signal (CSI-RS) on one or more CSI resources; and
transmit, to the base station, the CSI based on the configuration information,
wherein the CSI includes information for a CSI reporting mode assumed by the UE to calculate the CSI.

14. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

receiving, from a base station, configuration information related to channel state information (CSI);
receiving, from the base station, a CSI reference signal (CSI-RS) on one or more CSI resources; and
transmitting, to the base station, the CSI based on the configuration information,
wherein the CSI includes information for a CSI reporting mode assumed by the UE to calculate the CSI.

15. A method performed by a base station in a wireless communication system, the method comprising:

transmitting, to a user equipment (UE), configuration information related to channel state information (CSI);
transmitting, to a UE, a CSI reference signal (CSI-RS) on one or more CSI resources; and
receiving, from the UE, the CSI,
wherein the CSI includes information for a CSI reporting mode assumed by the UE to calculate the CSI.

16. A base station operating in a wireless communication system, the base station comprising:

at least one transceiver for transmitting and receiving a wireless signal; and
at least one processor for controlling the at least one transceiver,
wherein the at least one processor configured to:

transmit, to a user equipment (UE), configuration information related to channel state information (CSI);
transmit, to a UE, a CSI reference signal (CSI-RS) on one or more CSI resources; and
receive, from the UE, the CSI,
wherein the CSI includes information for a CSI reporting mode assumed by the UE to calculate the CSI.

# FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

# FIG.3

Resource Block

Resource Element
- In a resource grid, $(k,\bar{l})$
- In a resource block,$(k,l)$

# FIG.4

# FIG.5

Resource grid

A carrier
(up to 3300 subcarriers,i,e.,275 RBs)

A BWP

1 RB=12 subcarrier

1 RE

1 subcarrier

1 Symbol

k=0

l=0  ‥‥‥

## FIG.6

INITIAL CELL SEARCH — PSS/SSS& [DLRS]& PBCH — S601

SYSTEM INFORMATION RECEPTION — PDCCH/PDSCH (BCCH) — S602

RANDOM ACCESS PROCEDURE
- PRACH — S603
- PDCCH/PDSCH — S604
- PUSCH — S605
- PDCCH/PDSCH — S606

GENERAL DL/UL Tx/Rx
- PDCCH/PDSCH — S607
- PUSCH/PUCCH — S608

· DL/UL ACK/NACK
· UE CQI/PMI RI REPORT
  USING PUSCH AND PUCCH

## FIG.7

## FIG.8

Input layer    Hidden layer    Output layer

## FIG.9

# FIG.10

Input image
36×36

4 feature maps

28×28

Convolution
(kernel:9×9×1)

14×14

Max pooling

# FIG.11

W     V

$x_1$     $h1$     $x'_1$

$x_2$     $x'_2$

$x_3$     $h2$     $x'_3$

Encoder   Decoder

Loss function: $\underset{W,V}{\arg\min} \| x - g(f(x)) \|^2$ ,

where h = f(x) = Wx, x' = g(h) = Vh

# FIG.12

# FIG.13

End device partition
(partial AI operation/model)

Network partition
(partial AI operation/model)

Actor

Intermediate
data

Inference
outputs

End device

Network AI end device

## FIG.14

| UE | RAN node 1 | RAN node 2 | Network node |

1. Training data
1. Training data
2. Model training
3. Model deployment/update
4. Inference data
4. Inference data
5. Model inference
6. Model performance feedback
7. Action
8. Feedback
8. Feedback

## FIG.15

| UE | RAN node 1 | RAN node 2 |

1. Training data
1. Training data
2. Model training
3. Inference data
3. Inference data
4. Model inference
5. Action
6. Feedback

## FIG.16

UE

RAN node

1. Training data

2. Model training

3. Model deployment/update

4. Inference data

5. Model inference

6. Model performance feedback

7. Action

8. Feedback

## FIG.17

Network

UE

Configuration information — S1701

CSI-RS — S1702

Downlink control information — S1703

CSI — S1704

## FIG.18

| Receive configuration information related to CSI | S1801 |

↓

| Receive CSI-RS | S1802 |

↓

| Transmit CSI | S1803 |

## FIG.19

| Transmit configuration information related to CSI | S1901 |

↓

| Transmit CSI-RS | S1902 |

↓

| Receive CSI | S1903 |

# FIG.20

## INTERNATIONAL SEARCH REPORT

| International application No. |
|---|
| **PCT/KR2023/008016** |

**A. CLASSIFICATION OF SUBJECT MATTER**

**H04B 7/06**(2006.01)i; **H04W 72/23**(2023.01)i; **H04L 5/00**(2006.01)i; **G06N 20/00**(2019.01)i

According to International Patent Classification (IPC) or to both national classification and IPC

**B. FIELDS SEARCHED**

Minimum documentation searched (classification system followed by classification symbols)

H04B 7/06(2006.01); H04B 7/04(2006.01); H04B 7/0417(2017.01); H04W 16/28(2009.01); H04W 24/02(2009.01); H04W 72/12(2009.01); H04W 88/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), 설정 정보(configuration information), CSI-RS(CSI reference signal), CSI 계산(computation), 가정(assumption)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0071387 A (LG ELECTRONICS INC.) 27 June 2018 (2018-06-27)<br>See paragraphs [0004]-[0093] and [0286]-[0409]; claims 1 and 5; and figures 5 and 10. | 1-3,8,12-16 |
| Y | | 5-7 |
| A | | 4,9-11 |
| Y | JP 2020-512731 A (LG ELECTRONICS INC.) 23 April 2020 (2020-04-23)<br>See paragraphs [0082]-[0099]. | 5 |
| Y | WO 2016-148352 A1 (LG ELECTRONICS INC.) 22 September 2016 (2016-09-22)<br>See paragraph [0236]. | 6 |
| Y | TEXAS INSTRUMENTS. Multi-rank implicit feedback for dynamic SU/MU-MIMO switching.<br>R1-102106, 3GPP TSG-RAN WG1 Meeting #60bis. Beijing, China. 08 April 2010.<br>See section 2. | 7 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 October 2023** | **05 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/008016** |

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2014-0126383 A1 (TONG, Hui et al.) 08 May 2014 (2014-05-08)<br>See paragraphs [0008] and [0040]. | 1-16 |

Form PCT/ISA/210 (second sheet) (July 2022)

**INTERNATIONAL SEARCH REPORT**
Information on patent family members

International application No.

**PCT/KR2023/008016**

| Patent document cited in search report | | | Publication date (day/month/year) | Patent family member(s) | | | Publication date (day/month/year) |
|---|---|---|---|---|---|---|---|
| KR | 10-2018-0071387 | A | 27 June 2018 | KR | 10-2014803 | B1 | 27 August 2019 |
| | | | | US | 10567045 | B2 | 18 February 2020 |
| | | | | US | 10771213 | B2 | 08 September 2020 |
| | | | | US | 11031976 | B2 | 08 June 2021 |
| | | | | US | 2019-0007107 | A1 | 03 January 2019 |
| | | | | US | 2019-0312696 | A1 | 10 October 2019 |
| | | | | US | 2020-0127711 | A1 | 23 April 2020 |
| | | | | WO | 2017-171485 | A1 | 05 October 2017 |
| | | | | WO | 2017-171486 | A2 | 05 October 2017 |
| | | | | WO | 2017-171486 | A3 | 02 August 2018 |
| JP | 2020-512731 | A | 23 April 2020 | CN | 110419169 | A | 05 November 2019 |
| | | | | CN | 110419169 | B | 26 November 2021 |
| | | | | EP | 3598658 | A1 | 22 January 2020 |
| | | | | EP | 3598658 | B1 | 03 November 2021 |
| | | | | JP | 6898997 | B2 | 07 July 2021 |
| | | | | US | 11032046 | B2 | 08 June 2021 |
| | | | | US | 2020-0099488 | A1 | 26 March 2020 |
| | | | | WO | 2018-169375 | A1 | 20 September 2018 |
| WO | 2016-148352 | A1 | 22 September 2016 | US | 10659126 | B2 | 19 May 2020 |
| | | | | US | 2018-0076870 | A1 | 15 March 2018 |
| US | 2014-0126383 | A1 | 08 May 2014 | CN | 103636156 | A | 12 March 2014 |
| | | | | CN | 103636156 | B | 17 May 2017 |
| | | | | CN | 107196691 | A | 22 September 2017 |
| | | | | CN | 107196691 | B | 12 January 2021 |
| | | | | EP | 2710758 | A1 | 26 March 2014 |
| | | | | EP | 2710758 | B1 | 06 July 2022 |
| | | | | JP | 2015-517756 | A | 22 June 2015 |
| | | | | JP | 5950143 | B2 | 13 July 2016 |
| | | | | US | 10051489 | B2 | 14 August 2018 |
| | | | | WO | 2013-166699 | A1 | 14 November 2013 |

Form PCT/ISA/210 (patent family annex) (July 2022)